# EUROPÄISCHE PATENTANMELDUNG

(11) **EP 2 210 543 A1**
(43) Veröffentlichungstag der Anmeldung: **28.07.2010**
(21) Anmeldenummer: 09015043.4
(22) Anmeldetag: 04.12.2009
(51) Int. Cl.: A47J 43/25, B26D 3/28

(54) **Vorrichtung zum manuellen Schneiden von Lebensmitteln**

(30) Priorität: 22.01.2009 DE 202009000833 U
(71) Anmelder: Beckmann, Jörg, 31139 Hildesheim (DE); HaPe GmbH, 30539 Hannover (DE)
(72) Erfinder: Beckmann, Jörg, 31139 Hildesheim (DE)
(74) Vertreter: Scheffler, Jörg

(57) **Zusammenfassung**

Die Erfindung betrifft eine Vorrichtung (1) zum manuellen Schneiden von Lebensmitteln mit zwei zueinander schwenkbeweglichen Grundkörpern (2, 3), die in der Nichtgebrauchsstellung flächig gegeneinander liegen und auf diese Weise einen lediglich geringen Stauraum erfordern. Jeder Grundkörper (2, 3) bildet zugleich eine Führungsbahn für das Lebensmittel mit einer ein Schneidfeld aufweisenden Funktionsfläche. Um eine einfach handhabbare, platzsparende und universell einsetzbare Vorrichtung zu schaffen weisen in der ersten Arbeitsstellung die jeweiligen Vorderseiten (10) und in der zweiten Arbeitsstellung die jeweiligen Rückseiten (11, 12) der beiden Grundkörper (2, 3) nach außen. Dadurch ergeben sich vielfältige Nutzungsmöglichkeiten durch insgesamt maximal vier unterschiedliche Schneidfelder.

## Beschreibung

Die Erfindung betrifft eine Vorrichtung zum manuellen Schneiden von Lebensmitteln mit zwei zueinander aus einer Nichtgebrauchsstellung in eine Arbeitsstellung um eine Schwenkachse schwenkbeweglichen Grundkörpern und einer integrierten Rasteinrichtung im Bereich der Schwenkachse zur Festlegung definierter Winkelstellungen der Grundkörper, wobei jeder Grundkörper als Führungsbahn als Schneidfeld für das Lebensmittel ausgeführte Funktionsflächen an seiner Vorderseite sowie an seiner Rückseite aufweist.

Derartige Vorrichtungen sind als Schneidgeräte für den Kücheneinsatz in vielfältigen Formen bekannt, beispielsweise in Form von Reiben. Diese bestehen aus einem plattenförmigen Grundkörper aus Metall oder Kunststoff, der auf einer Seite eine Führungsbahn für das zu behandelnde Lebensmittel bildet, in deren Verlauf ein Schneidfeld angeordnet ist. Das Schneidfeld besteht aus einer flächenhaften, gleichförmigen Verteilung von einzelnen, aus der Ebene des Grundkörpers herausragenden Schneidprofilen. Jedes Schneidprofil ist durch eine Ausnehmung des Grundkörpers und eine sich oberhalb derselben erstreckende, insbesondere aufwölbende Schnittkante gekennzeichnet, die zum Eindringen in das entlang der Führungsbahn bewegte Lebensmittel eingerichtet ist, sodass sich im Bereich jeder Schnittkante eine auch durch die genannte Ausnehmung definierte Schneidspaltgeometrie ergibt, von deren Abmessungen und Form sich die Gestalt des bei einer Schneidbewegung von dem Lebensmittel abgelösten Schnittgutes ableitet.

Eine gattungsgemäße Vorrichtung ist beispielsweise aus der DE 20 2007 006 186 U1 bekannt, die dem manuellen Schneiden von Lebensmitteln mit zumindest einem Schneidfeld dient. Zwei an einem Ende um eine Achse schwenkbar miteinander in Verbindung stehende und in definierten Winkelstellungen um die Achse relativ zueinander fixierbare Grundkörper sind dabei mit unterschiedlichen Schneidprofilen ausgerüstet. Die definierte Winkelstellung wird dabei gemäß einer Ausführungsform durch einen Abstandshalter sichergestellt, welcher die der Achse abgewandten Endbereiche der Grundkörper mittels Zapfen verbindet. Dabei kann das Schneidfeld wenigstens eines Grundkörpers mit Ausnehmungen versehen sein, denen oberseitig und unterseitig Schneidprofile zugeordnet sind.

Weiterhin ist eine gattungsgemäße Vorrichtung auch schon aus der CH 356877 bekannt, die eine Schneidvorrichtung für Gemüse und dergleichen beschreibt. Die Vorrichtung hat zwei zueinander, aus einer Nichtgebrauchsstellung in eine Arbeitsstellung um eine Schwenkachse schwenkbewegliche Gehäuseteile, die in der gestreckten Arbeitsstellung ebenso wie in ihrer zusammengeklappten Nichtgebrauchsstellung mittels einer integrierten Rasteinrichtung im Bereich der Schwenkachse durch Rasten oder Schnappverriegelungen in ihrer Stellung festlegbar sind.

Die US 5,312,054 A offenbart auch bereits eine selbststehende, V-förmige Vorrichtung zum Schneiden von Lebensmitteln mit zwei zueinander aus einer Nichtgebrauchsstellung in eine Arbeitsstellung um eine Schwenkachse schwenkbeweglichen Grundkörpern mit unterschiedlichen Schneidprofilen und mit Mitteln zur Festlegung definierter Winkelstellungen der Grundkörper.

Die US 989,896 bezieht sich auf eine Vorrichtung zum manuellen Schneiden von Lebensmitteln mit zwei zueinander um eine Schwenkachse schwenkbeweglichen Grundkörpern und einem Schneidfeld für das Lebensmittel an einer Vorderseite sowie an einer Rückseite.

Aus der US 149,259 ist ebenfalls bereits eine aufklappbare Vorrichtung zum manuellen Schneiden von Lebensmitteln mit zwei schwenkbeweglichen Grundkörpern bekannt, wobei jeder Grundkörper als Führungsbahn mit einem Schneidfeld für das Lebensmittel ausgeführt ist.

Der Erfindung liegt die Aufgabe zu Grunde, eine Möglichkeit zu schaffen, eine einfach handhabbare und universell einsetzbare Vorrichtung zu schaffen. Insbesondere soll die Einstellung der Arbeitsstellung vereinfacht und die Reinigung erleichtert werden.

Diese Aufgabe wird erfindungsgemäß mit einer Vorrichtung gemäß den Merkmalen des Anspruchs 1 gelöst. Die weitere Ausgestaltung der Erfindung ist den Unteransprüchen zu entnehmen.

Erfindungsgemäß ist also eine Vorrichtung vorgesehen, bei der durch die in Achsrichtung betätigbare Rasteinrichtung eine Nichtgebrauchsstellung, in welcher die Grundkörper gegeneinander liegen, sowie zumindest zwei Arbeitsstellungen festlegbar sind, in welchen die Grundkörper jeweils einen spitzen Winkel zwischen sich einschließen, wobei in der ersten Arbeitsstellung die jeweiligen Vorderseiten und in der zweiten Arbeitsstellung die jeweiligen Rückseiten der beiden Grundkörper nach außen weisen. Hierdurch kann der Benutzer die jeweils gewünschte der drei möglichen Stellungen problemlos auswählen, indem er zunächst durch eine Betätigung, insbesondere eines Druckknopfes oder eines Schiebers in Achsrichtung, die Rastfunktion aufhebt und die beiden Grundkörper anschließend wahlweise in entgegengesetzte Schwenkrichtungen schwenkt, bis die jeweilige Arbeitsstellung erreicht ist. Dabei verrasten die Grundkörper in der vorbestimmten Winkelstellung selbsttätig, sodass eine fehlerhafte Betätigung der Vorrichtung nahezu ausgeschlossen ist. Dadurch, dass die Vorrichtung in zwei Arbeitsstellungen festlegbar ist, ergeben sich vielfältige Nutzungsmöglichkeiten durch insgesamt maximal vier unterschiedliche Schneidfelder oder Funktionsflächen. Selbstverständlich müssen nicht alle Funktionsflächen eine Schneidfunktion aufweisen. Weiterhin können die jeweiligen Funktionsflächen in beide Richtungen wirksam sein, um so die Effizienz der Funktionsflächen zu steigern.

Dabei erweist es sich in der Praxis als besonders zweckmäßig, wenn der zwischen den Vorderseiten und Rückseiten der Grundkörper in den beiden Arbeitsstellungen jeweils eingeschlossene spitze Winkel übereinstimmt. Hierdurch ändern sich die äußeren Abmessungen, insbesondere also der Neigungswinkel der Funktionsflächen in den beiden Arbeitsstellungen grundsätzlich nicht, sodass insbesondere die zwischen den Grundkörpern eingeschlossene Auffangfläche für das geschnittene Lebensmittel erhalten bleibt.

Weiterhin gestattet eine Abwandlung der vorliegenden Erfindung, bei welcher jeder Grundkörper an der Vorderseite und der Rückseite unterschiedliche Funktionsflächen aufweist, eine problemlose Nutzung der jeweils geeigneten Funktionsfläche, ohne dass hierzu die Funktionsfläche ausgetauscht werden muss. Vielmehr kann der Benutzer ohne zusätzlichen Aufwand zwischen vier nutzbaren Funktionsflächen auswählen.

Dabei ist es besonders zweckmäßig, wenn gemäß einer weiteren Ausgestaltung die Funktionsflächen der Vorderseite und/oder der Rückseite des einen Grundkörpers der Vorderseite und/oder der Rückseite des anderen Grundkörpers abweichen, um so den Nutzwert der Vorrichtung weiter zu verbessern.

Vorzugsweise sind die Funktionsflächen der Vorderseite und der Rückseite durch ein Blech mit beidseitigen Schneiden gebildet, wobei die Schneidgeometrien oder Schneidenausbildungen unterschiedlich ausgeführt und in einem einzigen Arbeitsgang, beispielsweise durch Ätzen, hergestellt sind.

Eine andere, ebenfalls besonders Erfolg versprechende Weiterbildung wird dadurch erreicht, dass die Rasteinrichtung einen die Nichtgebrauchsstellung sowie die Arbeitsstellungen formschlüssig festlegenden, axial beweglichen Rastkörper aufweist. Hierdurch wird ein äußerst kompakter Aufbau der Rasteinrichtung realisierbar, der einerseits das Erscheinungsbild nicht beeinträchtigt, andererseits eine für den Benutzer intuitiv ausführbare Betätigung in Richtung der Schwenkachse gestattet. Der Rastkörper kommt entsprechend seiner axialen Position mit einem entsprechenden Widerlager in formschlüssigen Eingriff, der zur Einstellung der Arbeitsstellung unterbrochen wird.

Dabei erweist es sich als besonders sinnvoll, wenn der Rastkörper mittels eines manuell betätigbaren Druckkörpers entgegen der Vorspannkraft eines Federelementes in Achsrichtung beweglich ist. Der hierzu in haptisch optimierter Weise ausgeformte Druckkörper, beispielsweise ein Druckknopf, gestattet somit eine denkbar einfache Bedienung. Der Druckkörper kann zudem durch seine Gestaltung ebenso wie seine Farbgebung hervorgehoben sein, um seine Bedienung noch augenfälliger zu gestalten. Eine bloße Druckbetätigung gibt den Rastkörper frei, um die Stellung der Grundkörper zu ändern.

Dabei ist es besonders praxisnah, wenn der Druckkörper rotationssymmetrisch ausgeführt und koaxial zu der Schwenkachse angeordnet ist, sodass sich der Druckkörper mühelos in den Bereich der Stirnfläche der Schwenkachse integrieren lässt bzw. diese Stirnfläche ersetzt.

Eine unbeabsichtigte Betätigung wird dabei dadurch vermieden, dass der Druckkörper am Umfang von einem endseitigen Abschnitt des zweiten Grundkörpers radial eingeschlossen ist, sodass der Druckkörper nicht versehentlich betätigt werden kann und im Wesentlichen konturbündig oder flächenbündig von dem endseitigen Abschnitt des zweiten Grundkörpers stirnseitig eingeschlossen ist. Auf diese Weise wird zugleich das Eindringen von Schmutzpartikeln oder Lebensmittelrückständen in einfacher Weise vermieden, um so die Reinigung der Vorrichtung zu erleichtern.

Vielmehr steht der Druckkörper in seiner Ruheposition nicht oder lediglich geringfügig gegenüber dem endseitigen Abschnitt des zweiten Grundkörpers hervor und springt in seiner Betätigungsposition gegenüber dem endseitigen Abschnitt des zweiten Grundkörpers zurück. Hierdurch ist eine ausreichende Betätigkraft in Verbindung mit einer definierten Betätigungsrichtung zum Erreichen der Betätigungsposition erforderlich, sodass die Zuverlässigkeit bei der Handhabung verbessert und eine unbeabsichtigte Betätigung vermieden wird.

Der Rastkörper könnte radial beweglich und beispielsweise als Sperrklinke ausgeführt sein, um die Grundkörper in ihrer gewünschten Winkelstellung zu fixieren. Besonders Erfolg versprechend ist es hingegen, wenn der Rastkörper mit dem ersten Grundkörper in Bezug auf die Schwenkachse axial beweglich und drehfest verbunden ist und in der Nichtgebrauchsstellung sowie den Arbeitsstellungen mit Ausformungen des zweiten Grundkörpers eine formschlüssige Verbindung eingeht. Dabei entspricht eine erste axiale Position der formschlüssigen Verbindung, während eine zweite axiale Position dazu führt, dass der Rastkörper und die Ausformung außer Eingriff sind und somit eine relative Schwenkbewegung ungehindert erfolgen kann. Die drehfeste Anordnung gegenüber dem ersten Grundkörper führt dabei zu einer Festlegung des die Ausformung aufweisenden zweiten Grundkörpers in der Nichtgebrauchsstellung und in den Arbeitsstellungen.

Dabei erweist es sich als besonders praxisnah, wenn der Rastkörper mehrere Ausnehmungen aufweist und die Ausformung als eine Rastnase ausgeführt ist, welche somit eine einfache Anpassung der Arbeitsstellungen an eine vorbestimmte Winkelstellung gestattet.

Grundsätzlich genügt eine einzige Rasteinrichtung zur Festlegung der Winkelstellungen. Besonders praxisgerecht ist hingegen auch eine Ausgestaltung, bei der die Vorrichtung mit zwei Rasteinrichtungen an gegenüberliegenden Enden der Schwenkachse ausgestattet sind, wobei der jeweilige Rastkörper durch eine in entgegengesetzte Richtungen wirkende Druckkraft betätigbar ist, sodass der Benutzer die beiden Rasteinrichtungen mit nur einer Hand problemlos betätigen kann, indem er die beiden Druckkörper zwischen Daumen und Zeigefinger zusammendrückt und dabei beide Rastkörper freigibt.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer perspektivischen Ansicht in
- Fig. 1: eine Vorrichtung zum Schneiden von Lebensmitteln in einer Nichtgebrauchsstellung;
- Fig. 2: die in Figur 1 gezeigte Vorrichtung während der Schwenkbewegung in eine erste Arbeitsstellung;
- Fig. 3: die in Figur 1 gezeigte Vorrichtung in einer zweiten Arbeitsstellung;
- Fig. 4: einen Ausschnitt einer integrierten Rasteinrichtung der Vorrichtung in der Nichtgebrauchsstellung;
- Fig. 5: eine teilweise geschnittene Darstellung der integrierten Rasteinrichtung in einer Arbeitsstellung während der Betätigung des Druckkörpers.

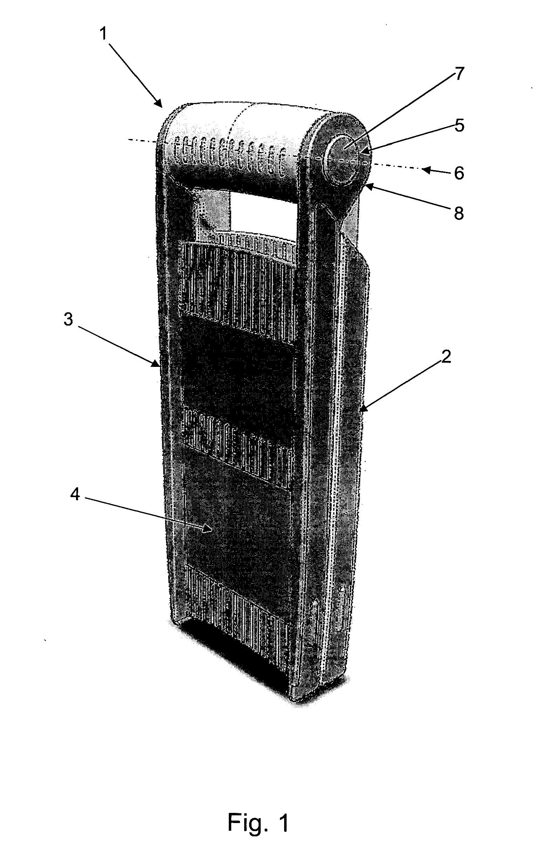

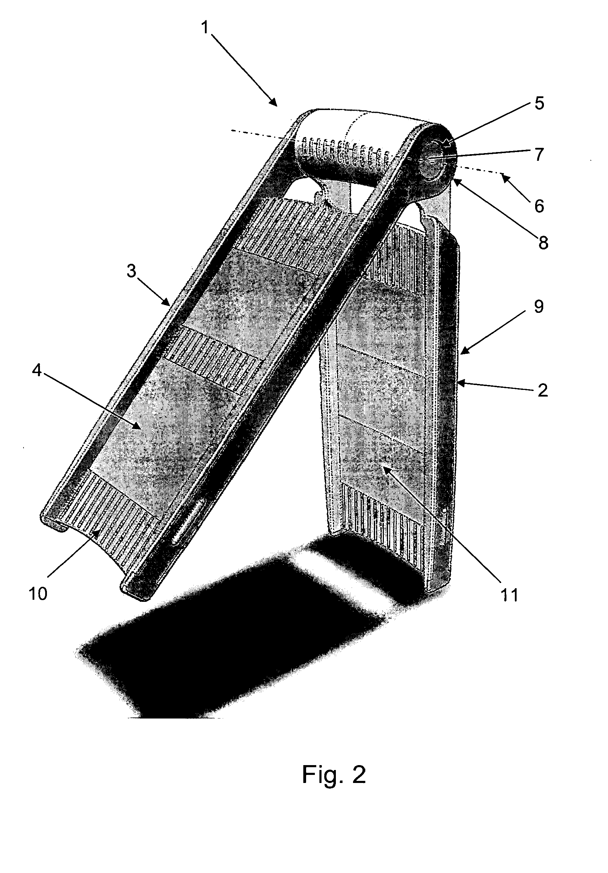

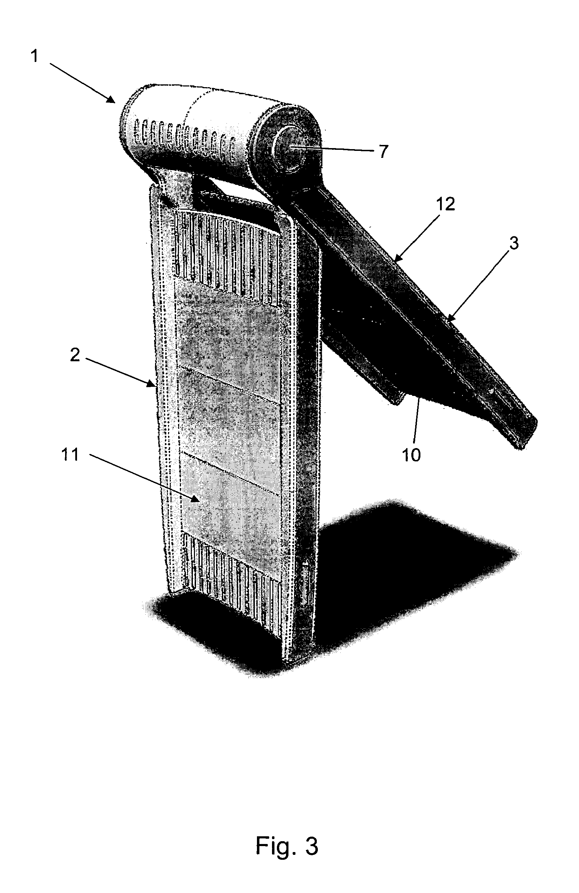

Figur 1 zeigt eine Vorrichtung 1 zum manuellen Schneiden von Lebensmitteln mit zwei zueinander schwenkbeweglichen Grundkörpern 2, 3, die in der dargestellten Nichtgebrauchsstellung flächig gegeneinander liegen und auf diese Weise einen lediglich geringen Stauraum erfordern. Jeder Grundkörper 2, 3 bildet zugleich eine Führungsbahn für das Lebensmittel mit einer ein Schneidfeld aufweisenden Funktionsfläche 4. Die Vorrichtung 1 ist mit einer integrierten Rasteinrichtung 5 im Bereich einer Schwenkachse 6 zur Festlegung sowohl der gezeigten Nichtgebrauchsstellung als auch der in den Figuren 2 und 3 erkennbaren Arbeitsstellungen der Grundkörper 2, 3 ausgestattet. Ein zum Freigeben der Rastposition bestimmter Druckkörper 7 der Rasteinrichtung 5, welcher am Umfang von einem endseitigen Abschnitt 8 des zweiten Grundkörpers 3 radial eingeschlossen ist, steht in seiner Ruheposition geringfügig gegenüber diesem endseitigen Abschnitt 8 hervor, sodass eine unbeabsichtigte Betätigung nahezu ausgeschlossen ist.

Die Figuren 2 und 3 zeigen unterschiedliche Arbeitsstellungen, wobei in Figur 2 die Vorrichtung 1 in einer Betätigungsposition des Druckkörpers 7 während der Schwenkbewegung der Grundkörper 2, 3 um eine Schwenkachse 6 in eine erste Arbeitsstellung dargestellt ist. In dieser Betätigungsposition des Druckkörpers 7 tritt dieser gegenüber dem endseitigen Abschnitt 8 des zweiten Grundkörpers 3 zurück. Der hier als Druckknopf ausgeführte Druckkörper 7 behält dabei solange die zurückspringende Position, bis die Rasteinrichtung 5 in der vorbestimmten Arbeitsstellung unter dem Einfluss der Vorspannkraft eines nicht gezeigten Federelementes verrastet. In dieser ersten Arbeitsstellung weisen die jeweiligen Vorderseiten 9, 10 der beiden Grundkörper 2, 3 nach außen, sodass die entsprechenden Funktionsflächen 4 genutzt werden können.

Demgegenüber ist in Figur 3 die in Figur 1 gezeigte Vorrichtung 1 in einer zweiten Arbeitsstellung dargestellt, in welcher die jeweiligen Rückseiten 11, 12 der beiden Grundkörper 2, 3 nach außen weisen. In der gezeigten Position ist die vorbestimmte Winkelstellung zwischen den Grundkörpern 2, 3 bereits erreicht, sodass der Druckkörper 7 in die in Figur 1 erkennbare, geringfügig hervorstehende Ruheposition zurückgekehrt ist. Ausgehend von der in Figur 1 gezeigten Nichtgebrauchsstellung werden also die beiden Arbeitsstellungen entsprechend der Figuren 2 oder 3 durch gegensinniges Verschwenken der Grundkörper 2, 3 um denselben Winkelbetrag erreicht.

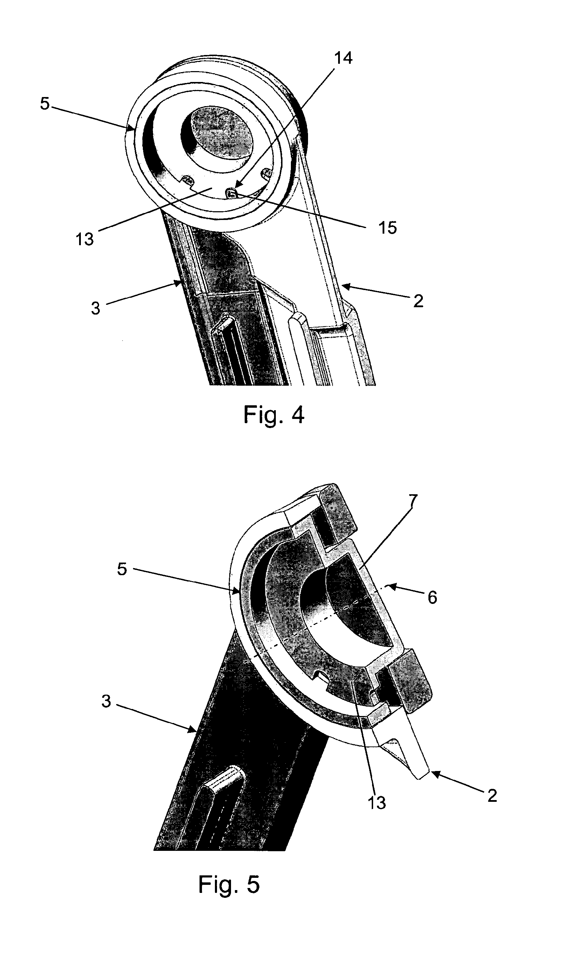

Die Funktionsweise der integrierten Rasteinrichtung 5 der Vorrichtung 1 wird anhand der Figuren 4 und 5 nochmals verdeutlicht, wobei Figur 4 die Nichtgebrauchsstellung entsprechend Figur 1 und Figur 5 eine Betätigungsposition der Rasteinrichtung 5 während der Schwenkbewegung entsprechend Figur 2 zeigt. Die Rasteinrichtung 5 weist hierzu einen die Nichtgebrauchsstellung sowie die Arbeitsstellungen formschlüssig festlegenden, axial beweglichen Rastkörper 13 auf, welcher mittels des manuell betätigbaren Druckkörpers 7 entgegen der Vorspannkraft eines nicht gezeigten Federelementes in Richtung der Schwenkachse 6 verschiebbar ist. Dabei ist der Rastkörper 13 mit dem ersten Grundkörper 2 in Bezug auf die Schwenkachse 6 axial beweglich und drehfest, und in der Nichtgebrauchsstellung sowie den Arbeitsstellungen mittels mehrerer, als Ausnehmung ausgeführter Ausformungen 14, in welche eine Rastnase 15 des zweiten Grundkörpers 3 eingreift, formschlüssig verbunden.

## Patentansprüche

1. Vorrichtung (1) zum manuellen Schneiden von Lebensmitteln mit zwei zueinander aus einer Nichtgebrauchsstellung in eine Arbeitsstellung um eine Schwenkachse (6) schwenkbeweglichen Grundkörpern (2, 3) und einer integrierten Rasteinrichtung (5) im Bereich der Schwenkachse (6) zur Festlegung definierter Winkelstellungen der Grundkörper (2, 3), wobei jeder Grundkörper als Führungsbahn als Schneidfeld für das Lebensmittel ausgeführte Funktionsflächen (4) an seiner Vorderseite (9, 10) sowie an seiner Rückseite (11, 12) aufweist, **dadurch gekennzeichnet, dass** durch die in Achsrichtung betätigbare Rasteinrichtung (5) eine Nichtgebrauchsstellung, in welcher die Grundkörper (2, 3) gegeneinander liegen, sowie zumindest zwei Arbeitsstellungen festlegbar sind, in welchen die Grundkörper (2, 3) jeweils einen spitzen Winkel zwischen sich einschließen, wobei in der ersten Arbeitsstellung die jeweiligen Vorderseiten (9, 10) und in der zweiten Arbeitsstellung die jeweiligen Rückseiten (11, 12) der beiden Grundkörper (2, 3) nach außen weisen.

2. Vorrichtung (1) nach Anspruch 1, **dadurch gekennzeichnet, dass** der zwischen den Vorderseiten (9, 10) und Rückseiten (11, 12) der Grundkörper (2, 3) in den beiden Arbeitsstellungen jeweils eingeschlossene spitze Winkel übereinstimmt.

3. Vorrichtung (1) nach den Ansprüchen 1 oder 2, **dadurch gekennzeichnet, dass** jeder Grundkörper an der Vorderseite (9, 10) und der Rückseite (11, 12) unterschiedliche Funktionsflächen (4) aufweist.

4. Vorrichtung (1) nach zumindest einem der vorhergehenden Ansprüche, **dadurch gekennzeichnet, dass** die Funktionsflächen (4) der Vorderseite (9) und/oder der Rückseite (11) des einen Grundkörpers (2) von der Vorderseite (10) und/oder der Rückseite (12) des anderen Grundkörpers (3) abweichen.

5. Vorrichtung (1) nach zumindest einem der vorhergehenden Ansprüche, **dadurch gekennzeichnet, dass** die Funktionsflächen (4) der Vorderseite (9) und der Rückseite (11) durch ein Blech mit beidseitigen Schneiden gebildet sind.

6. Vorrichtung (1) nach zumindest einem der vorhergehenden Ansprüche, **dadurch gekennzeichnet, dass** die Rasteinrichtung (5) einen die Nichtgebrauchsstellung sowie die Arbeitsstellungen formschlüssig festlegenden, axial beweglichen Rastkörper (13) aufweist.

7. Vorrichtung (1) nach Anspruch 6, **dadurch gekennzeichnet, dass** der Rastkörper (13) mittels eines manuell betätigbaren Druckkörpers (7) entgegen der Vorspannkraft eines Federelementes in Achsrichtung beweglich ist.

8. Vorrichtung (1) nach Anspruch 7, **dadurch gekennzeichnet, dass** der Druckkörper (7) rotationssymmetrisch ausgeführt und koaxial zu der Schwenkachse (6) angeordnet ist.

9. Vorrichtung (1) nach Anspruch 7 oder 8, **dadurch gekennzeichnet, dass** der Druckkörper (7) am Umfang von einem endseitigen Abschnitt (8) des zweiten Grundkörpers (3) radial eingeschlossen ist.

10. Vorrichtung (1) nach zumindest einem der Ansprüche 7 bis 9, **dadurch gekennzeichnet, dass** der Druckkörper (7) in seiner Ruheposition nicht oder lediglich geringfügig gegenüber dem endseitigen Abschnitt (8) des zweiten Grundkörpers (3) hervorsteht und in seiner Betätigungsposition gegenüber dem endseitigen Abschnitt (8) des zweiten Grundkörpers (3) zurückspringt.

11. Vorrichtung (1) nach zumindest einem der Ansprüche 6 bis 10, **dadurch gekennzeichnet, dass** der Rastkörper (13) mit dem ersten Grundkörper (2) in Bezug auf die Schwenkachse (6) axial beweglich und drehfest verbunden ist, und in der Nichtgebrauchsstellung sowie den Arbeitsstellungen mit Ausformungen (14) des zweiten Grundkörpers (3) formschlüssig verbunden ist.

12. Vorrichtung (1) nach zumindest einem der Ansprüche 6 bis 11, **dadurch gekennzeichnet, dass** der Rastkörper (13) mehrere Ausnehmungen aufweist und die Ausformung (14) eine Rastnase (15) aufweist.

13. Vorrichtung (1) nach zumindest einem der vorhergehenden Ansprüche, **dadurch gekennzeichnet, dass** die Vorrichtung (1) mit zwei Rasteinrichtungen (5) an gegenüberliegenden Enden der Schwenkachse (6) ausgestattet ist, wobei der jeweilige Rastkörper (13) durch eine in entgegengesetzte Richtungen wirkende Druckkraft betätigbar ist.
